# EUROPÄISCHE PATENTSCHRIFT

(11) **EP 2 516 133 B1**
(45) Veröffentlichungstag und Bekanntmachung des Hinweises auf die Patenterteilung: **24.06.2015**
(21) Anmeldenummer: 10808971.5
(22) Anmeldetag: 07.12.2010
(51) Int. Cl.: B29C 49/46, B29C 49/12, B29C 49/78, B29C 49/06, B29C 49/36, B29C 49/64

(54) **VERFAHREN UND VORRICHTUNG ZUR HERSTELLUNG VON GEFÜLLTEN BEHÄLTERN**
METHOD AND DEVICE FOR PRODUCING FILLED CONTAINERS
PROCEDE ET DISPOSITIF DE FABRICATION DE RECIPIENTS REMPLIS

(30) Priorität: 23.12.2009 DE 102009060726; 09.02.2010 DE 102010007541
(43) Veröffentlichungstag der Anmeldung: 31.10.2012
(73) Patentinhaber: KHS GmbH, 44143 Dortmund (DE); KHS Corpoplast GmbH, 22145 Hamburg (DE)
(72) Erfinder: HAESENDONCKX, Frank, 22047 Hamburg (DE); KLATT, Dieter, 22147 Hamburg (DE); VON HAMME, Thomas, Dr., 24629 Kisdorf (DE); BAUMGARTE, Rolf, 22926 Ahrensburg (DE); RIEGER, Harald, 22303 Hamburg (DE); WILHELM, Lothar, 61184 Karben (DE); STOLTE, Thomas, 55545 Bad Kreuznach (DE)
(74) Vertreter: Mahler, Peter
(86) Internationale Anmeldenummer: PCT/DE2010/001441
(87) Internationale Veröffentlichungsnummer: WO 2011/076167

(56) Entgegenhaltungen:
- EP-A1- 1 529 620
- WO-A1-01/19594
- WO-A2-2007/120807
- JP-A- 2000 043 129

## Beschreibung

Die Erfindung betrifft ein Verfahren zur Herstellung von gefüllten Behältern, bei dem ein Vorformling aus einem thermoplastischen Material nach einer thermischen Konditionierung entlang eines Transportweges im Bereich einer Heizstrecke innerhalb einer Form durch Druckeinwirkung in den Behälter umgeformt wird sowie bei dem als Fluid zur Behälterformung ein in den Behälter abzufüllendes Füllmedium verwendet wird.

Die Erfindung betrifft darüber hinaus eine Vorrichtung zur Herstellung von gefüllten Behältern aus einem thermoplastischen Material, die mindestens eine entlang eines Transportweges eines Vorformlings angeordnete Heizstrecke und eine mit einer Form versehene Formstation aufweist, sowie bei der die Formstation eine Zuführeinrichtung für ein in den Behälter abzufüllendes Füllmedium aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert. Die WO 01/19594 A1 zeigt ebenfalls ein Verfahren zum Blasformen von thermisch konditionierten Behältern.

Gemäß einem typischen Verarbeitungsverfahren werden die wie vorstehend beschrieben hergestellten blasgeformten Behälter einer nachfolgenden Fülleinrichtung zugeführt und hier mit dem vorgesehenen Produkt abgefüllt. In der Regel werden somit eine separate Blasmaschine und eine separate Füllmaschine verwendet. Bekannt ist es ebenfalls bereits, eine separate Blasmaschine und eine separate Füllmaschine unmittelbar miteinander zu koppeln und eine sogenannte verblockte Blas-FüllEinrichtung bereitzustellen.

Bekannt ist es darüber hinaus bereits, die Formung der Behälter durch das abzufüllende Füllgut selbst vorzunehmen. Ein entsprechend temperierter Vorformling wird hierzu in eine geeignete Form eingesetzt und anschließend wird das flüssige Füllmedium in den Vorformling sowie die sich aus diesem Vorformling entwickelnde Behälterblase eingeleitet. Die Behälterblase wird hierbei solange aufgeweitet, bis eine vollständige Anlage an der Innenkontur der Form erreicht und der Behälter gefüllt ist. Ein derartiges Verfahren wird auch als hydraulisches Formungsverfahren bezeichnet.

Bei einer Behälterformung durch das Füllmedium selbst wird lediglich nur noch eine Maschine benötigt, die dafür allerdings eine erhöhte Komplexität aufweist. Erste Versuchsergebnisse mit derartigen Einrichtungen zeigen allerdings, dass die Qualität der hergestellten Behälter noch deutlich unterhalb der Qualität von konventionell hergestellten blasgeformten Behältern liegt. Dies liegt im wesentlichen daran, dass eine Vielzahl bei der Durchführung eines Blasvorganges verfügbarer Prozeßparameter bei einer hydraulischen Behälterformung entweder nicht vorliegen oder noch nicht erschlossen werden konnten.

Aus der JP 2000 043129 A und der WO 2007/120807 A2 sind Verfahren bekannt, bei denen ein Vorfomling auf eine vorgegebene Temperatur aufgeheizt und in eine Blasform eingebracht wird. Der Vorformling wird dann zunächst durch einen Reckstab axial gereckt. In den gereckten Vorformling wird dann in einem zweiten Schritt ein flüssiges Füllmedium, das auf die vorgegebene Temperatur aufgeheizt ist, eingebracht, um den Vorformling innerhalb der Blasform durch radiales Dehnen zu einer PET-Flasche umzuformen.

Aufgabe der vorliegenden Erfindung ist es, ein Verfahren der einleitend genannten Art derart zu verbessern, daß mit geringem maschinenbaulichen Aufwand eine qualitativ hochwertige Behälterformung bei gleichzeitig hohen Durchsatzraten unterstützt wird.

Diese Aufgabe wird erfindungsgemäß durch ein Verfahren gemäß Anspruch 1 gelöst, wobei der Vorformling während seiner Umformung in den Behälter mindestens zeitweilig von einer Reckstange geführt wird. Das Verfahren ist dadurch gekennzeichnet, dass die von der Reckstange auf den Vorformling einwirkende Reckkraft gemessen und der Volumenstrom des Füllmediums in Abhängigkeit von der gemessenen Reckkraft derart gesteuert wird, dass zur Führung des Vorformlings immer eine Mindestreckkraft aufrechterhalten bleibt.

Weitere Aufgabe der vorliegenden Erfindung ist es, eine Vorrichtung der einleitend genannten Art derart zu konstruieren, daß hohe Durchsatzraten bei einfachem konstruktiven Aufbau und guter Produktqualität unterstützt werden.

Diese Aufgabe wird erfindungsgemäß durch eine Vorrichtung gemäß Anspruch 8 gelöst, wobei die Formstation eine den Vorformling während seiner Umformung in den Behälter mindestens zeitweilig beaufschlagende Reckstange als Führungseinrichtung aufweist. Die Vorrichtung ist dadurch gekennzeichnet, dass durch die Führungseinrichtung auf den Vorformling eine Reckkraft ausübbar ist, die messbar ist, und der Volumenstrom des Füllmediums in Abhängigkeit von der gemessenen Reckkraft so regelbar ist, dass die Führungseinrichtung auf den Vorformling immer eine Mindestreckkraft ausübt.

Durch die Führung des Vorformlings bei der Umformung des Vorformlings in eine sich entwickelnde Behälterblase und anschließend in den mit der endgültigen Kontur versehenen Behälter wird erreicht, dass ein typischerweise im Bereich einer Vorformlingskuppe angeordnetes Zentrum definiert und reproduzierbar positioniert wird. Eine derartige definierte Positionierung ist wichtig, da bei der Aufweitung des Vorformlings in den Behälter eine biaxiale Orientierung des Materials des Vorformlings durchgeführt wird und hierfür eine gezielte und vorgebbare Materialverteilung innerhalb der Wandung des geformten Behälters erforderlich ist. Bei einer unkontrollierten Behälterformung sind hingegen unerwünschte und insbesondere ungleichmäßige Materialverteilungen zu erwarten.

Eine besonders wirkungsvolle Führung während des Formungsvorganges kann dadurch erfolgen, dass die Führung unter Verwendung einer Reckstange erfolgt.

Gemäß einer Ausführungsvariante ist vorgesehen, dass das Füllmedium mindestens teilweise durch die Reckstange hindurch zugeführt wird.

Alternativ oder ergänzend ist auch daran gedacht, dass das Füllmedium mindestens teilweise an der Reckstange vorbei zugeführt wird.

Ein gleichmäßiger Formungsvorgang wird dadurch erreicht, dass das Füllmedium mindestens zeitweilig mit einem konstanten Volumenstrom zugeführt wird.

Möglichkeiten zur Beeinflussung der Materialverteilung innerhalb der Wandung des geformten Behälters werden dadurch erschlossen, dass das Füllmedium mindestens zeitweilig mit einem variablen Volumenstrom zugeführt wird.

Eine äußerst kompakte Konstruktion wird dadurch unterstützt, dass der Behälter auf einem rotierenden Prozeßrad geformt, gefüllt und verschlossen wird.

Lediglich geringe von der Reckstange aufzubringende Reckkräfte können dadurch gewährleistet werden, dass ein Volumenstrom des Füllmediums in Abhängigkeit von einer gemessenen Reckkraft gesteuert wird.

In den Zeichnungen sind Ausführungsbeispiele der Erfindung schematisch dargestellt. Es zeigen:
- Figur 1: eine schematische Darstellung eines Grundaufbaus einer Einrichtung zur Durchführung einer hydraulischen Behälterformung unter Verwendung eines Füllgutes,
- Figur 2: einen schematischen Längsschnitt durch einen Vorformling mit bereits teilweise eingeführter Reckstange sowie einer Entlüftungseinrichtung,
- Figur 3: einen schematischen Längsschnitt durch einen geformten Behälter mit teilweise eingeführter Reck- und Fülleinrichtung,
- Figur 4: einen Längsschnitt durch eine abgewandelte Ausführungsform der Füll- und Formungseinrichtung,
- Figur 5: einen Längsschnitt durch eine Form- und Fülleinrichtung mit einer Abdichtung zur Verhinderung eines Nachtropfens,
- Figur 6: eine Ausführungsform mit steuerbarer Zuführung des Füllmediums und separater steuerbarer Entlüftung,
- Figur 7: eine schematische Darstellung einer kombinierten Formungs-, Füll- und Verschließeinrichtung und
- Figur 8: eine andere Ausführungsform einer kombinierten Einrichtung gemäß Figur 7.

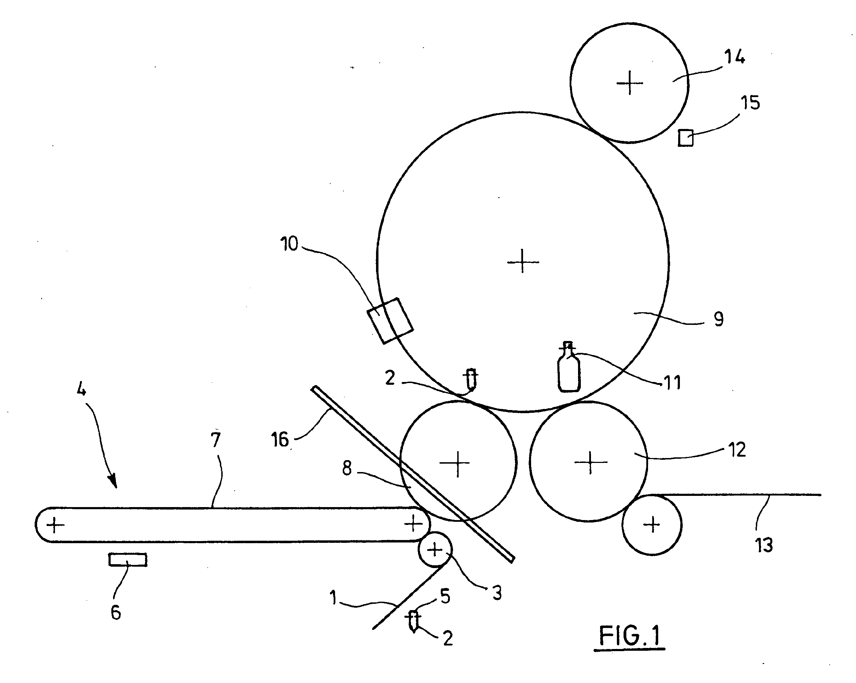

Der prinzipielle Aufbau einer kombinierten Form- und Fülleinrichtung ist in Figur 1 dargestellt. Von einer Zuführeinrichtung (1) werden schematisch dargestellte Vorformlinge (2) unter Verwendung eines Übergaberades (3) einer Heizeinrichtung (4) zugeführt. Im Bereich der Heizeinrichtung (4) können die Vorformlinge (1) anwendungsabhängig beispielsweise mit ihren Mündungsabschnitten (5) in lotrechter Richtung nach oben oder in lotrechter Richtung nach unten transportiert werden. Die Heizeinrichtung (4) kann beispielsweise mit Heizelementen (6) ausgestattet sein, die entlang einer Transporteinrichtung (7) angeordnet sind. Als Transporteinrichtung (7) kann beispielsweise eine umlaufende Kette verwendet werden.

Als Heizelemente (6) können beispielsweise IR-Strahler oder lichtemmittierende Dioden oder NIR-Strahler verwendet werden.

Nach einer ausreichenden Temperierung werden die beheizten Vorformlinge (2) von einem Übergaberad (8) zu einem rotationsfähig angeordneten Prozeßrad (9) übergeben. Das Prozeßrad (9) ist mit einer Mehrzahl von Formstationen (19) ausgestattet, in deren Bereich sowohl eine Umformung der Vorformlinge (2) in schematisch dargestellte Behälter (11) als auch eine Befüllung der Behälter (11) mit einem vorgesehenen Füllmedium erfolgt. Die Behälterformung erfolgt hierbei synchron mit der Befüllung und vom Füllmedium gesteuert.

Nach einer Formung und Befüllung werden die Behälter (11) von einem Entnahmerad (12) vom Prozeßrad (9) wegtransportiert und einer Ausgabestrecke (13) zugeführt.

Gemäß der Ausführungsform in Figur 1 ist es vorgesehen, dem Prozeßrad (9) über eine Eingabeeinrichtung (14) schematisch dargestellte Verschlußelemente (15) zuzuführen. Hierdurch ist es möglich, auf dem Prozeßrad (9) auch bereit ein Verschließen der Behälter (11) durchzuführen und unter Verwendung der Entnahmeeinrichtung (12) fertig geformte, gefüllte und verschlossene Behälter (11) zu handhaben. Das Verschlusselement (15) kann beispielsweise als eine aufschraubbare Verschlußkappe, ein Kronkorken oder eine Siegelfolie ausgebildet sein.

Als Material für die Vorformlinge (1) können vorzugsweise unterschiedliche thermoplastische Materialien verwendet werden. Beispielhaft seien Polyethylenterephthalat (PET), Polyäthylen (PE), Polyäthylennaphthalat (PEN) oder Polypropylen (PP) genannt. Die Dimensionierung der Vorformlinge sowie das Gewicht der Vorformlinge (2) können an die Größe, das Gewicht und die Gestaltung der herzustellenden Behälter (11) angepasst werden.

Im Bereich der Heizeinrichtung (4) sind typischerweise eine Vielzahl von elektrischen und elektronischen Bauteilen angeordnet. Darüber hinaus sind die Heizelemente (6) mit feuchtigkeitsempfindlichen Reflektoren versehen. Da im Bereich des Prozeßrades (9) unter Verwendung des flüssigen Füllmediums eine Befüllung und Formung der Behälter erfolgt, ist dafür zu sorgen, dass ein unbeabsichtigter Eintrag von Feuchtigkeit in den Bereich der Heizeinrichtung (4) vermieden wird. Dies kann beispielsweise durch eine Abschottung (16) erfolgen, die zumindest einen Spritzschutz bietet. Darüber hinaus ist es auch möglich, im Bereich des Übergaberades (8) verwendete Transportelemente für die Vorformlinge (2) geeignet zu temperieren oder mit Stößen von Druckgas derart zu beaufschlagen, dass anhaftende Feuchtigkeit nicht in den Bereich der Heizeinrichtung (4) gelangen kann.

Eine Handhabung der Vorformlinge (2) und/oder der Behälter (11) erfolgt vorzugsweise unter Verwendung von Zangen und/oder den Mündungsabschnitt (5) wenigstens bereichsweise von innen oder von außen beaufschlagenden Klemm- oder Steckelementen.

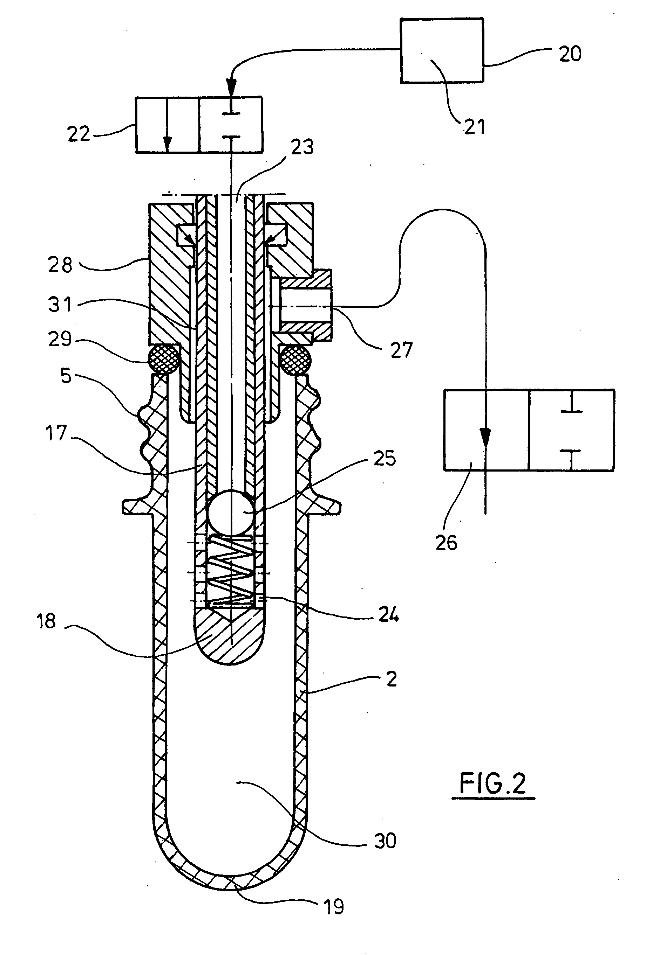

Figur 2 zeigt einen Längsschnitt durch einen Vorformling (2), in den eine Reckstange (17) eingeführt ist. Die Reckstange dient der mindestens zeitweisen Führung des Vorformlings (1) während seiner Umformung zum Behälter (11). Typischerweise erfolgt ein Kontakt zwischen einer Kuppe (18) der Reckstange (17) sowie einem Boden (19) des Vorformlings (2). Bei einem weiteren Einfahren der Reckstange (17) in den Vorformling (2) hinein wird eine Längsreckung des Vorformlings (2) verursacht. Nach einem Abschluss des Reckvorganges oder zumindest zeitweilig auch bereits während der Durchführung des Reckvorganges wird einer Vorratseinrichtung (20) entnommenes Füllmedium (21) in den Vorformling (2) eingeleitet.

Eine Dosierung des Füllmediums (21) erfolgt unter Verwendung eines Dosierventils (22). Beim dargestellten Ausführungsbeispiel ist die Reckstange (17) mindestens bereichsweise hohl ausgebildet und das Füllmedium (21) wird einem Innenraum (23) der Reckstange (17) zugeführt. Im Bereich einer Wandung der Reckstange (17) sind Ausströmöffnungen (24) angeordnet, die von einem Rückschlagventil (25) gegenüber dem Dosierventil (22) absperrbar sind. Hierdurch kann ein unbeabsichtigtes Heraustropfen von Füllmedium (21) aus der Reckstange (17) vermieden bzw. minimiert werden.

Eine Entlüftung des Vorformlings (2) kann unter Verwendung eines Entlüftungventils (26) erfolgen. Das Entlüftungsventil (26) ist mit einer Ausströmöffnung (27) verbunden, die im Bereich eines den Vorformlings (1) beaufschlagenden Anschlusselementes (28) angeordnet ist. Durch das Anschlusselement (28) hindurch ist die Reckstange (17) positionierbar. Der Vorformling (2) wird gegenüber dem Anschlußelement (28) von einer Dichtung (29) abgedichtet, die beispielsweise als ein O-Ring ausgebildet sein kann. Ein Innenraum (30) des Vorformlings (2) kann über einen Ringspalt (31) mit der Ausströmöffnung (27) verbunden sein. Der Ringspalt (31) umschließt hierbei bereichsweise die Reckstange (17).

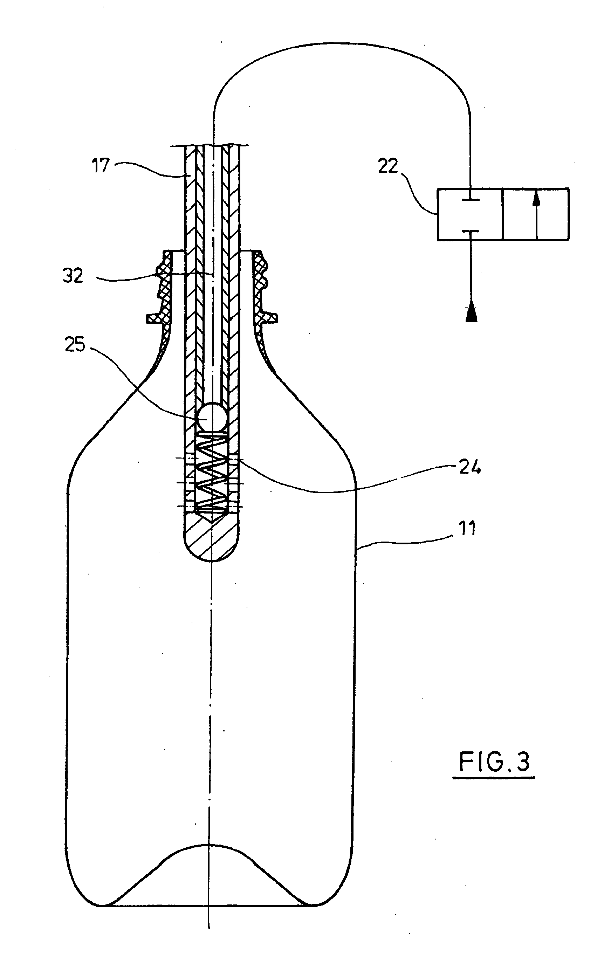

Figur 3 zeigt schematisch eine ähnliche Einrichtung wie in der Darstellung gemäß Figur 2 unter Verwendung einer hohlen Reckstange (17) mit einem eingebauten Rückschlagventil (25). Dargestellt ist allerdings ein bereits fertig geformter Behälter (11). Zu erkennen ist sowohl in Figur 2 als auch in Figur 3, dass vorzugsweise eine Mehrzahl von Ausströmöffnungen (24) im Bereich der Reckstange (17) angeordnet werden. Beim dargestellten Ausführungsbeispiel sind derartige Ausströmöffnungen (24) auf unterschiedlichen Höhenniveaus entlang einer Längsachse (32) der Reckstange (17) positioniert. Ebenfalls zeigt das dargestellte Ausführungsbeispiel eine Ausrichtung der Ausströmöffnungen (24) mit einer im wesentlichen horizontalen Ausströmrichtung. Sowohl die Anordnung der Ausströmöffnungen (24) im Bereich der Reckstange (17) als auch die Ausrichtung der Ausströmöffnungen (24) ist aber variierbar. Angestrebt wird typischerweise ein möglichst ruhiges und spritzarmes Ausströmverhalten.

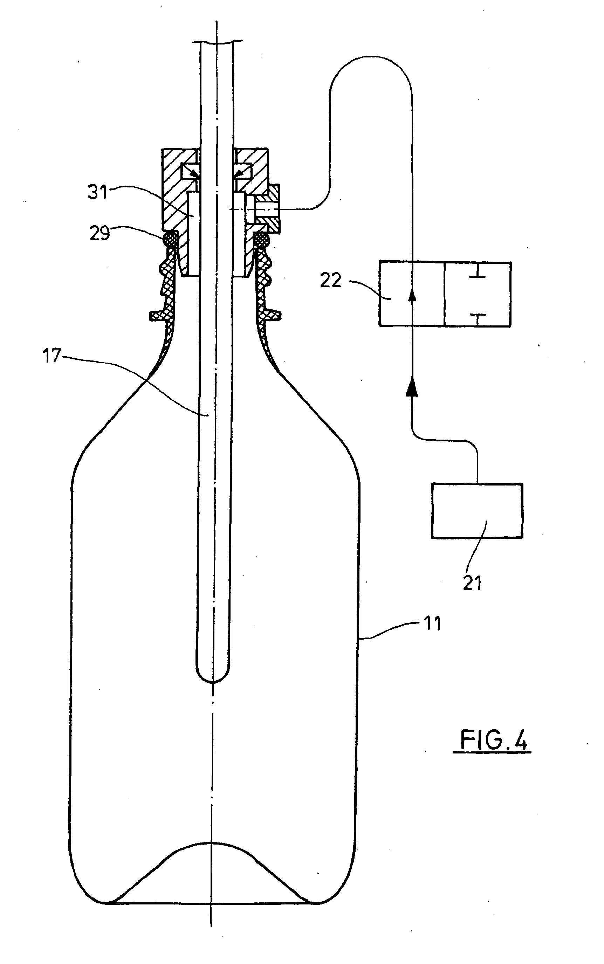

Gemäß der Ausführungsform in Figur 4 wird eine massive Reckstange (17) verwendet. Eine Zuführung des Füllmediums (21) erfolgt entlang mindestens eines Strömungskanals an der Reckstange (17) vorbei. Vorzugsweise wird hierzu der Ringspalt (31) verwendet. Auch bei dieser Ausführungsform ist es möglich, ein gezieltes Entlüften durchzuführen.

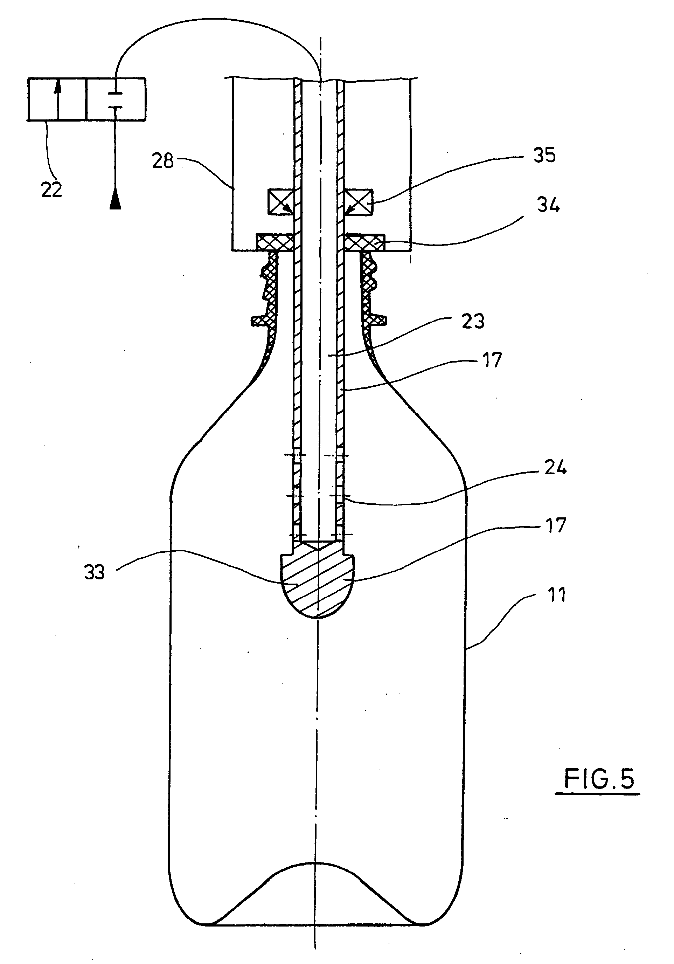

Figur 5 zeigt eine Ausführungsform, bei der die Reckstange (17) eine zur Verhinderung eines Nachtropfens optimierte Ausführungsform besitzt. Im Bereich der Kuppe (17) ist hierzu ein Dichtelement (33) angeordnet. Das Dichtelement (33) kann beispielsweise durch eine Durchmesservergrößerung der Reckstange (17) bereitgestellt werden. Ebenfalls ist eine geeignete Materialauswahl denkbar. Beim Zurückziehen der Reckstange (17) aus dem Behälter (11) heraus gelangt das Dichtelement (33) in Kontakt mit einem Gegenelement (33), das im Bereich des Anschlußelementes (28) angeordnet ist. Das Gegenelement (34) ist vorzugsweise als eine Dichtung ausgeführt. Die Ausströmöffnungen (24) der Reckstange (17) sind nach einer entsprechenden Positionierung der Reckstange (17) abgedichtet vom Behälter (11) getrennt angeordnet, so dass ein Nachtropfen aus dem Innenraum (23) der Reckstange (17) heraus sicher vermieden werden kann. Im Bereich des Anschlusselementes (28) ist typischerweise mindestens ein Lager (35) zur Führung der Reckstange (17) angeordnet.

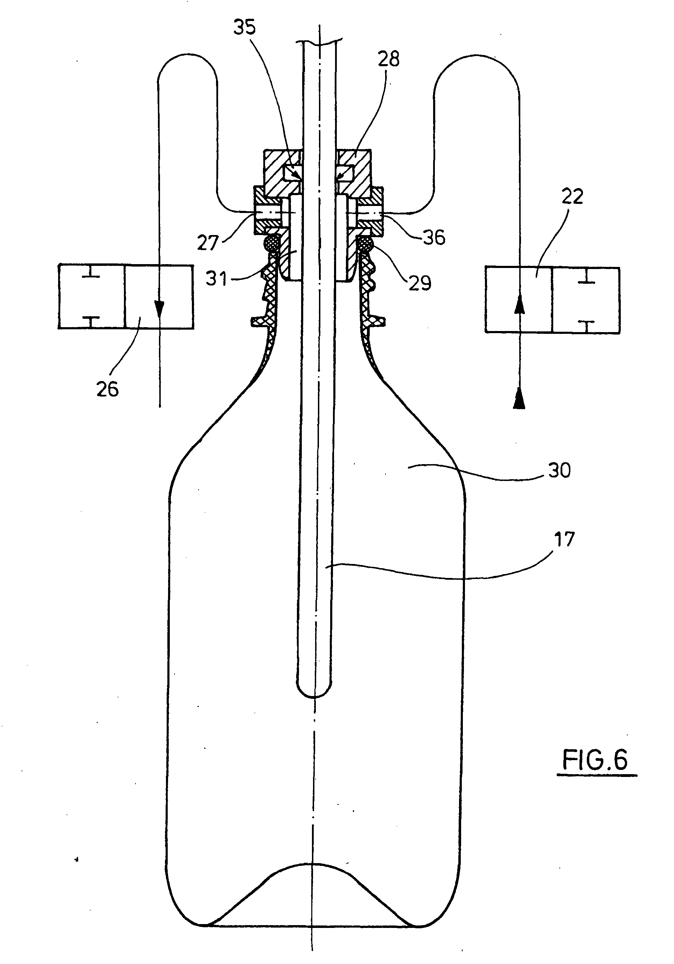

Figur 6 zeigt eine Ausführungsform, bei der wiederum eine massive Reckstange (17) verwendet wird. Durch an der Reckstange (17) vorbeilaufende Strömungskanäle, inbesondere durch den Ringspalt (31) hindurch, ist sowohl das Dosierventil (22) für das Füllmedium (21) als auch das Entlüftungsventil (26) mit dem Innenraum (30) des Vorformlings (2) bzw. des Behälters (11) verbunden. Beim dargestellten Ausführungsbeispiel ist die Ausströmöffnung (27) in einer radialen Richtung des Anschlußelementes (28) gegenüberliegend zu einer Zuführöffnung (36) angeordnet, die mit dem Dosierventil (22) verbunden ist.

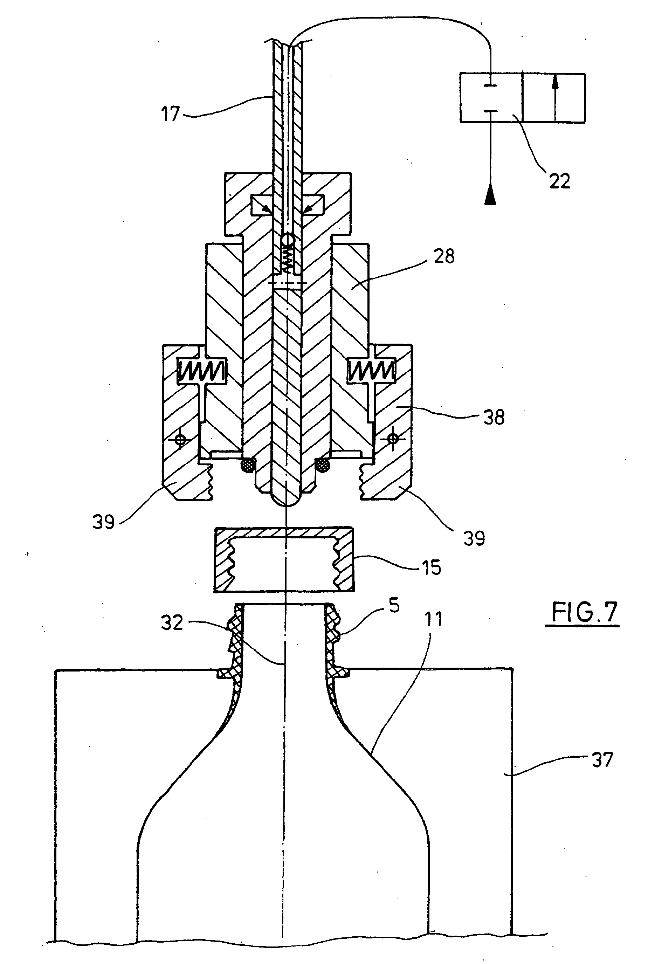

Figur 7 zeigt eine Ausführungsform, bei der im Bereich des Prozeßrades (9) gemäß Figur 1 auch ein Verschließen der Behälter (11) erfolgt. Der Behälter (11) ist hierbei noch im Bereich einer Form (37) angeordnet, die einen Teil der Formstation (10) gemäß Figur 1 ausbildet. Eine Verschließeinrichtung (38) ist bei dieser Ausführungsform bezüglich der Längsachse (32) koaxial zum Anschlußelement (28) angeordnet. Die Verschließeinrichtung (38) besitzt beispielsweise verschwenkbar angeordnete Greifer (39), die zur Beaufschlagung des Verschlußelementes (15) vorgesehen sind. Insbesondere ist daran gedacht, die Verschließeinrichtung (38) drehbeweglich relativ zum Anschlußelement (28) anzuordnen. Hierdurch kann das Verschlußelement (15) mit einem Innengewinde auf ein Außengewindes des Mündungsabschnittes (5) aufgeschraubt werden.

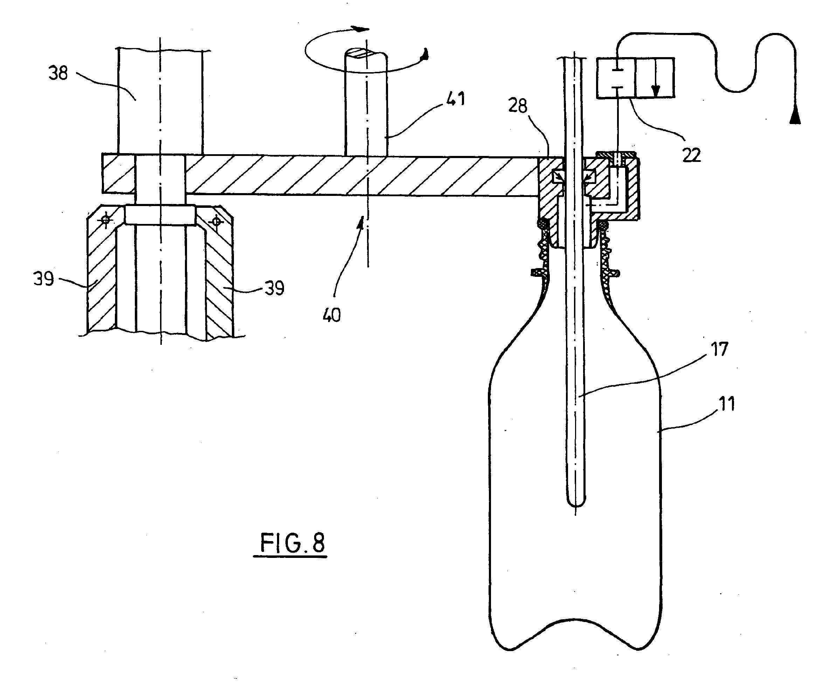

Figur 8 zeigt eine alternative Ausführungsform zur Konstruktion gemäß Figur 7. Die Verschließeinrichtung (38) und das Anschlußelement (28) sind hier nicht koaxial relativ zueinander angeordnet, sondern werden von einem Werkzeugträger (40) abwechselnd in einer Arbeitsanordnung bzw. einer Ruheanordnung positioniert. Der Werkzeugträger (40) kann beispielsweise revolverartig ausgebildet und mit einer Drehachse (41) versehen sein.

Nachfolgend werden einige prozeßtypische Parameter beispielhaft näher erläutert. Das Füllmedium (21) wird dem Anschlusselement (28) vorzugsweise mit einer Temperatur des umgebenden Raumes, beispielsweise im Bereich von 20°C bis 30°C, zugeführt. Das Füllmedium (21) kühlt hierdurch das Material des Behälters (11) und unterstützt eine schnelle Formstabilität des geformten Behälters (11). Hierdurch wird eine sehr kurze Zykluszeit unterstützt. Ebenfalls ist es aber möglich, das Füllmedium (21) stärker gekühlt oder erwärmt zuzuführen.

Während der Formung des Behälters (11) kann das Füllmedium (21) zumindest zeitweilig mit einem konstanten Volumenstrom in den Vorformling (2) bzw. den Behälter (11) eingeleitet werden. Es ist aber auch möglich, für den Volumenstrom ein geeignetes zeitliches Profil derart vorzugeben, dass zu unterschiedlichen Zeitpunkten unterschiedlich große Volumenströme generiert werden.

Vor einer Einleitung des Füllmediums (21) ist es möglich, innerhalb des Vorformlings (1) befindliche Luft abzusaugen und/oder durch ein Inertgas zu ersetzen. Dies empfiehlt sich insbesondere bei oxidationsempfindlichen Füllmedien (21).

Als Füllmedium (21) können entweder reine Flüssigkeiten oder mit Zusätzen versehene Flüssigkeiten verwendet werden. Insbesondere ist an eine Zuführung von carbonisierten Füllmedien gedacht. Da das Füllmedium (21) dem Vorformling (1) bzw. dem Behälter (2) unter Druck zugeführt wird, beispielsweise mit einem Druck von 10 bar, erweist es sich als zweckmäßig, sämtliche Strömungswege für das Füllmedium (21) derart zu gestalten, dass lokale Dekompressionen durch die Strömungsvorgänge vermieden werden. Eine lokale oder zeitweilige Dekompression könnte ansonsten zu einem Ausgasen von Kohlendioxid führen.

Alternativ zu der in Figur 1 dargestellten Beheizung von vorzugsweise spritzgegossenen Vorformlingen (2) ist es auch möglich, die Vorformlinge (2) unmittelbar vor ihrer Umformung in die Behälter (11) herzustellen. Dies kann beispielsweise durch einen Spritzgußvorgang wie bei einem sogenannten einstufigen Spritz-Blas-Verfahren erfolgen, ebenfalls ist eine Kompressions-Formung möglich. Eine derartige Formung der Vorformlinge (2) vermeidet die Verwendung von elektrischen und elektronischen Bauteilen im Bereich einer Heizeinrichtung oder reduziert zumindest wesentlich den Umfang einer Verwendung derartiger Teile, da diese dann nur noch für eine eventuell erforderliche Temperaturprofilierung benötigt werden.

Als Materialien für die Bauteile des Prozeßrades (9) werden vorzugsweise korrosionsfeste Stoffe verwendet. Gedacht ist insbesondere an die Verwendung von nichtrostenden Stählen sowie Kunststoffen. Insbesondere ist daran gedacht, die Formen (37) ganz oder teilweise aus einem geeigneten Kunststoff auszubilden.

Zur Minimierung der erforderlichen Reckkräfte ist daran gedacht, den Reckvorgang durch eine Zufuhr des Füllmediums (21) zu unterstützen. Bei einer derartigen Unterstützung ist allerdings dafür zu sorgen, dass die Führung des Vorformlings (2) durch die Reckstange (17) sichergestellt ist. Dies erfolgt erfindungsgemäß dadurch, dass die einwirkende Reckkraft gemessen wird und eine Steuerung des Volumenstromes des Füllmediums (21) derart erfolgt, dass immer eine Mindestreckkraft aufrecht erhalten bleibt. Die Größe der Reckkraft läßt sich insbesondere sehr einfach bei elektrisch angetriebenen Recksystemen durch die Messung des Antriebsstromes oder bei pneumatischen Recksystemen durch eine Druckmessung ermitteln.

Bei der Abfüllung von Behältern (11) mit dem Füllmedium (21) ist es häufig erwünscht, nach einem Verschließen des Behälters (11) einen gasgefüllten Kopfraum bereitzustellen. Dieser freie Kopfraum kann durch die Volumenverminderung generiert werden, die aus dem Zurückziehen der Reckstange (17) resultiert.

Die oben bereits erläuterte Materialauswahl erfolgt insbesondere auch unter Berücksichtigung von gegebenen Hygieneanforderungen. Es wird hierbei eine Entkeimbarkeit bzw. Sterilisierbarkeit gewährleistet. Ebenfalls erfolgt ein konstruktiver Aufbau derart, dass die Anforderungen an eine gute Reinigbarkeit erfüllt sind.

Eines oder mehrere der Übergaberäder können mit Servoantrieben ausgestattet sein.

Hierdurch wird es insbesondere unterstützt, eine vollständige Trennung der Heizeinrichtung (4) vom Prozeßrad (9) während der Durchführung von Reinigungsvorgängen zu realisieren. Ebenfalls ist daran gedacht, im Bereich mindestens eines der Übergaberäder zurückziehbare Handhabungselemente anzuordnen. Ein weiterer Feuchtigkeitsschutz kann durch die Verwendung eines Trockenlufttunnels erfolgen.

Nachfolgend wird beispielhaft ein konkreter Prozeßablauf beschrieben. Vor oder nach dem Einsetzen des Vorformlings (2) in die Form (37) erfolgt zunächst ein Gasaustausch im Innenraum des Vorformlings, um insbesondere Sauerstoff zu verdrängen oder den Anteil von Sauerstoff zu vermindern. Ein Vorgang des Spülens und/oder Evakuierens dauert typischerweise höchstens 0,1 Sekunde. Das Recken des Vorformlings (2) unter Verwendung der Reckstange (17) dauert typischerweise etwa 0,2 Sekunden. Ebenfalls ist für das Füllen und die hieraus resultierende Umformung des Vorformlings (2) in den Behälter (11) ein Zeitraum von etwa 0,2 Sekunden vorgesehen. Für das anschließende Schaffen eines Kopfraumes wird typischerweise maximal ein Zeitraum von 0,2 Sekunden benötigt. Der Vorgang des Beruhigens und Entlastens des abgefüllten Behälters erfolgt bei stillen Getränken äußerst schnell, bei kohlensäurehaltigen Getränken kann dieser Vorgang einen Zeitraum bis zu 5 Sekunden in Anspruch nehmen.

Eine Behandlung des Kopfraumes kann anschließend beispielsweise unter Verwendung einer Hochdruckaufschäumung oder einer Zudosierung von Stickstoff erfolgen. Das anschließende Zuführen einer Verschlußkappe kann bei carbonisierten Getränken einen Zeitraum bis zu 1,5 Sekunden in Anspruch nehmen. Ebenfalls nimmt der Vorgang des Verschließens bzw. Aufschraubens beispielsweise einen Zeitraum von 1,5 Sekunden in Anspruch.

Nach dem fertigen Verschließen des Behälters (11) öffnet die Form (37) und der abgefüllte Behälter (11) wird entnommen und abtransportiert.

Während der Einleitung des Füllgutes in den umzuformenden Vorformling (2) bzw. den noch in der Formung befindlichen Behälter (11) ergibt sich in der Regel ein typischer Druckverlauf im Füllsystem. Aufgrund der Aufweitung des Behälters (11) liegt zunächst ein vergleichsweise geringer Druck vor, der zum Ende des Formungsvorgangs ansteigt. Der entsprechende Druckanstieg bzw. die Höhe des Druckanstieges im Füllsystem, insbesondere in der Füllleitung, kann als Steuergröße für einen folgenden Prozeßschritt verwendet werden und gegebenenfalls den Zeitpunkt der Einleitung dieses nächsten Prozeßschrittes bestimmen. Alternativ oder ergänzend ist auch daran gedacht, als Steuergrößen die Charakteristik des Druckverlaufes und/oder des Volumenstromes des Füllgutes zu verwenden.

Hinsichtlich der Temperatur des Füllgutes ist insbesondere daran gedacht, das Füllgut mit einer Umgebungstemperatur zuzuführen. In Abhängigkeit von den jeweiligen Anwendungsrandbedingungen ist aber gegenüber einer Befüllung mit Umgebungstemperatur auch eine Temperaturerhöhung oder eine Temperaturerniedrigung denkbar.

Gemäß einer weiteren Variante ist daran gedacht, den Füllvorgang zweistufig durchzuführen, wobei während der ersten Prozeßstufe das Füllgut mit einer Temperatur zugeführt wird, die größer ist als die Temperatur während des zweiten Prozeßschrittes. Der erste Prozeßschritt kann beispielsweise durchgeführt werden, wenn über die Reckstange (11) die Längsreckung des Vorformlings (2) durchgeführt wird. Der zweite Prozeßschritt schließt sich dann an die Durchführung des Reckvorganges an und entspricht der Queraufweitung des Behälters (11).

Bei der vorstehend bereits kurz erwähnten Beruhigung im Kopfraum nach der Druckentlastung ist auch daran gedacht, gegebenenfalls eine Absaugung von sich bildenden Gasen und/oder Schaum durchzuführen.

Hinsichtlich des Verschließens der fertig geformten und befüllten Behälter (11) sind ebenfalls unterschiedliche Varianten realisierbar. Bei einer Variante ist es möglich, einen Teil der Behandlungsstation auf dem Blasrad mit einem Revolverkopf zu versehen. Der Revolverkopf umfasst einerseits einen Blas- und Füllkopf und andererseits einen Verschließkopf. Dies entspricht der schematischen Darstellung in Figur 8. Ebenfalls ist es aber denkbar, eine integrierte Konstruktion zu verwenden, bei der der jeweilige Kopf sowohl den Blas-, den Füll- und den Verschließvorgang durchführt.

Gemäß einer weiteren Variante sind zwar der Blas- Füllkopf und der Verschließkopf als separate Bauteile ausgebildet, jedoch verschwenkbar an jeder Formungs- und Füllstation angeordnet. Gemäß einer dritten Variante ist lediglich der Blas- und Füllkopf auf dem Blasrad angeordnet und es erfolgt eine Übergabe des noch offenen Behälters an eine separate Verschlußvorrichtung, beispielsweise ein Transportrad, das mit einem Verschließkopf ausgestattet ist.

Die Applikation der Verschlüsse, beispielsweise der Verschlusskappen, kann beispielsweise unmittelbar nach der Öffnung der Formen (37) erfolgen. Hierdurch würde somit eine Aufgabe der verschlusskappen auf dem Blasrad erfolgen. Insbesondere ist daran gedacht, vor einer Aufgabe der Verschlusskappen den Mündungsraum des gefüllten Behälters (11) mit einem Inertgas zu beaufschlagen.

## Patentansprüche

1. Verfahren zur Herstellung von gefüllten Behältern (11), bei dem ein Vorformling (2) aus einem thermoplastischen Material entlang eines Transportweges im Bereich einer Heizstrecke (4) thermisch konditioniert und anschließend innerhalb einer Form (37) durch Druckeinwirkung in den Behälter (11) umgeformt wird, und der Vorformling (2) während seiner Umformung in den Behälter (11) zumindest zeitweilig von einer Reckstange (17) geführt wird, wobei zur Behälterformung ein in den Behälter abzufüllendes Füllmedium (21) verwendet wird, und der Reckvorgang durch die Zufuhr des Füllmediums unterstützt wird, **dadurch gekennzeichnet, dass** die von der Reckstange (17) auf den Vorformling (2) einwirkende Reckkraft gemessen und der Volumenstrom des Füllmediums (21) in Abhängigkeit von der gemessenen Reckkraft derart gesteuert wird, dass zur Führung des Vorformlings immer eine Mindestreckkraft aufrechterhalten bleibt.

2. Verfahren nach Anspruch 1, **dadurch gekennzeichnet, dass** die Reckstange (17) elektrisch angetrieben wird und die Messung der einwirkenden Reckkraft durch die Messung des Antriebsstromes erfolgt oder dass die Reckstange pneumatisch angetrieben wird und die Messung der einwirkenden Reckkraft durch eine Druckmessung erfolgt.

3. Verfahren nach Anspruch 1 oder 2, **dadurch gekennzeichnet, dass** das Füllmedium mindestens teilweise durch die Reckstange (17) hindurch zugeführt wird.

4. Verfahren nach Anspruch 1 oder 2, **dadurch gekennzeichnet, dass** das Füllmedium (21) mindestens teilweise an der Reckstange (17) vorbei zugeführt wird.

5. Verfahren nach einem der Ansprüche 1 bis 4, **dadurch gekennzeichnet, dass** das Füllmedium (21) mindestens zeitweilig mit einem konstanten Volumenstrom zugeführt wird.

6. Verfahren nach einem der Ansprüche 1 bis 4, **dadurch gekennzeichnet, dass** das Füllmedium (21) mindestens zeitweilig mit einem variablen Volumenstrom zugeführt wird.

7. Verfahren nach einem der Ansprüche 1 bis 6, **dadurch gekennzeichnet, dass** der Behälter (11) auf einem rotierenden Prozeßrad (9) geformt, gefüllt und verschlossen wird.

8. Vorrichtung zur Herstellung von gefüllten Behältern (11) aus einem thermoplastischen Material, die mindestens eine entlang eines Transportweges eines Vorformlings (2) angeordnete Heizstrecke (4) und eine mit einer Form (37) versehene Formstation (10) aufweist, sowie bei der die Formstation (10) eine Zuführeinrichtung (20, 22) für ein in den Behälter abzufüllendes Füllmedium (21) aufweist und die Formstation (10) eine den Vorformling (2) während seiner Umformung in den Behälter (11) mindestens zeitweilig beaufschlagende Reckstange (17) als Führungseinrichtung aufweist, und der Vorformling (2) zur Umformung mit einem in den Behälter abzufüllenden Füllmedium (21) beaufschlagbar ist, **dadurch gekennzeichnet, dass** durch die Führungseinrichtung auf den Vorformling eine Reckkraft ausübbar ist, die messbar ist, und der Volumenstrom des Füllmediums in Abhängigkeit von der gemessenen Reckkraft so regelbar ist, dass die Führungseinrichtung (17) auf den Vorformling (2) immer eine Mindestreckkraft ausübt.

## Claims

1. Method for manufacturing filled containers (11), wherein a preform (2) of a thermoplastic material is thermally conditioned in the area of a heating section (4) along a transport path, and is subsequently deformed, within a mold (37), into a container (11) by pressure application, and wherein the preform (2) is during its transformation into the container (11) at least temporarily guided by a stretch rod (17), wherein a filling medium (21) to be filled into the container is used as fluid for the container formation, and the stretching process is supported by the supply of filling medium **characterized in that** the stretching force of the stretch rod (17) acting upon the preform (2) is measured and the volumetric flow of the filling medium (21) is controlled depending on the measured stretching force in such a way that a minimum stretching force is always maintained for guiding the preform.

2. The method according to claim 1, **characterized in that** the stretch rod (17) is driven electrically and the acting stretching force is measured by measuring the drive current or that the stretch rod is driven pneumatically and the acting stretching force is measured by a pressure measurement.

3. The method according to claim 1 or 2, **characterized in that** the filling medium is supplied at least partially through the stretching rod (17).

4. The method according to claim 1 or 2, **characterized in that** the filling medium is supplied at least partially past the stretching rod (17).

5. The method according to one of claims 1 to 4, **characterized in that** the filling medium (21) is at least temporarily supplied with a constant volumetric flow.

6. The method according to one of claims 1 to 4, **characterized in that** the filling medium (21) is at least temporarily supplied with a variable volumetric flow.

7. The method according to one of claims 1 to 6, **characterized in that** the container (11) is shaped, filled and closed on a rotating process wheel (9).

8. A device for manufacturing filled containers (11) of a thermoplastic material, comprising at least one heating section (4) arranged along a transport path of a preform (2) and a molding station (10) provided with a mold (37), wherein the molding station (10) includes a feeding device (20, 22) for a filling medium (21) to be filled into the container, and the molding station (10) includes a stretch rod (17) as a guiding device for at least temporarily acting on the preform (2) during its transformation into the container (11), and the preform (2) may be supplied with the filling medium (21) to be filled into the container for its transformation into the container, **characterized in that** the guiding device may exert a measurable stretching force on the perform, and the volumetric flow of the filling medium may be controlled depending on the measured stretching force such that the guiding device (17) always exerts a minimum stretching force on the perform (2).

## Revendications

1. Procédé de fabrication de récipients remplis (11), dans lequel une préforme (2) en matériau thermoplastique est conditionnée thermiquement le long d'un chemin de transport dans la zone d'un parcours de chauffage (4) et est transformée à l'intérieur d'un moule (37) en récipient en la pressurisant et où la préforme (2) est guidée au moins temporairement par une barre d'étirage (17) pendant sa transformation en récipient (11), où l'on utilise pour la formation du récipient un matériau de remplissage (21) destiné à remplir le récipient et le processus d'étirage est soutenu par l'injection du matériau de remplissage, **caractérisé en ce que** la force d'étirage (17) agissant sur la préforme (2) par la barre d'étirage (17) est mesurée et que le courant volumique du matériau de remplissage (21) est contrôlé en fonction de la force d'étirage mesurée de telle sorte qu'une force d'étirage minimale est toujours maintenue pour guider la préforme.

2. Procédé selon la revendication 1, **caractérisé en ce que** la barre d'étirage (17) est entraînée électriquement et que l'on mesure la force d'étirage agissante en mesurant le courant d'entraînement ou que la barre d'étirage est entraînée pneumatiquement et que l'on mesure la force d'étirage agissante en mesurant la pression.

3. Procédé selon la revendication 1 ou 2, **caractérisé en ce que** le matériau de remplissage est alimenté au moins en partie à travers la barre d'étirage (17).

4. Procédé selon la revendication 1 ou 2, **caractérisé en ce que** le matériau de remplissage (21) est alimenté au moins en partie à coté de la barre d'étirage (17).

5. Procédé selon l'une des revendications 1 à 4, **caractérisé en ce que** le matériau de remplissage (21) est acheminé au moins temporairement avec un courant volumique constant.

6. Procédé selon l'une des revendications 1 à 4, **caractérisé en ce que** le matériau de remplissage (21) est acheminé au moins temporairement avec un courant volumique variable.

7. Procédé selon l'une des revendications 1 à 6, **caractérisé en ce que** le récipient (11) est moulé, rempli et scellé sur une roue de traitement rotative (9).

8. Dispositif de fabrication de récipients remplis (11) à partir d'un matériau thermoplastique, présentant au moins un parcours de chauffage (4) disposé le long d'un chemin de transport d'une préforme (2) et un poste de moulage (10) pourvu d'un moule (37), où le poste de moulage (10) présente un dispositif d'acheminement (20, 22) pour un matériau de remplissage (21) à verser dans le récipient et le poste de moulage (10) présente une barre d'étirage (17) faisant office de dispositif de guidage, agissant au moins temporairement sur la préforme (2) pendant sa transformation en récipient (11), et la préforme (2) peut être alimentée avec un matériau de remplissage (21) destiné à remplir le récipient pour obtenir la transformation, **caractérisé en ce qu'**une force d'étirage peut être exercée sur la préforme par le dispositif de guidage, force qui est mesurable, et que le courant volumique du matériau de remplissage est réglable en fonction de la force d'étirage mesurée de telle sorte que le dispositif de guidage (17) exerce toujours une force d'étirage minimale sur la préforme (2).
